Europäisches Patentamt

(19) European Patent Office    (11) Publication number: **0 219 213**
**B1**
Office européen des brevets

(12) **EUROPEAN PATENT SPECIFICATION**

(45) Date of publication of the patent specification:
**18.07.90**

(21) Application number: **86306700.5**

(22) Date of filing: **29.08.86**

(51) Int. Cl.⁵: **C22B 58/00,** C01G 15/00,
C22B 7/00

(54) Method of recovering gallium from scrap containing gallium.

(30) Priority: **13.09.85 JP 203120/85**
**09.07.86 JP 162727/86**

(43) Date of publication of application:
**22.04.87 Bulletin 87/17**

(45) Publication of the grant of the patent:
**18.07.90 Bulletin 90/29**

(84) Designated Contracting States:
**BE CH DE FR LI**

(56) References cited:
**FR-A- 1 541 220**
**US-A- 2 927 853**
**US-A- 2 928 731**
**US-A- 3 075 901**
**US-A- 4 097 267**
**US-A- 4 362 560**

**CHEMICAL ABSTRACTS, vol. 91, 1979, page 122,**
**abstract no. 195304m, Columbus, Ohio, US; &**
**JP-A-79 74 298 (FUJITSU LTD) 14-06-1979 .**
**CHEMICAL ABSTRACTS, vol. 81, no. 6, 12th**
**August 1974, page 496, abstract no. 32642z, Columbus,**
**Ohio, US; N.Kh. AGLIULOV et al.: "Synthesis of gallium**
**trichloride", & TR. KHIM. KHIM. TEKHNOL. 1973,**
**(4), 49-50**

(73) Proprietor: **SUMITOMO METAL MINING COMPANY**
**LIMITED, 11-3, Shinbashi 5-chome Minato-ku,**
**Tokyo 105(JP)**

(72) Inventor: **Kubo, Shigeki, 3771-9, Funakikou, Niihama City**
**Ehime Prefecture(JP)**

(74) Representative: **Hartley, David et al, Withers &**
**Rogers 4 Dyer's Buildings Holborn, London,**
**EC1N 2JT(GB)**

## Description

Field of the Invention:

This invention relates to a method of recovering gallium from scrap containing gallium.

Description of the Prior Art:

Gallium is used as a material for making a compound semiconductor such as GaP or GaAs, or as a flux when an epitaxial layer is formed on a semiconductor substrate. As a result, there is eventually formed scrap of a gallium compound or metallic gallium. It is very important to recover gallium from such scrap from the standpoint of effective use of the resources. There are known a number of methods for recovering gallium from scrap. One of them is described in the Japanese Patent Publication 57-101625/1982. It comprises the vacuum thermal decomposition of scrap containing gallium arsenide, its heating and cooling treatment, filtration of the molten material, treatment for forming an aqueous phase and refining by recrystallization. Another method is described in the Japanese Patent Publication 59-213622/1984. It comprises decomposing an intermetallic gallium compound by oxidation, adjusting the pH of the resulting solution, contacting the solution with a chelate resin so that the resin may adsorb gallium from the solution, passing an aqueous alkali solution through the resin to form an eluate of gallium and subjecting the eluate to electrolysis. Both of these methods are, however, complicated. Moreover, neither of them can recover gallium of high purity easily.

## SUMMARY OF THE INVENTION

It is an object of this invention to provide a method which can comparatively easily recover gallium of high purity from scrap containing gallium.

This object is attained by a method comprising treating scrap containing gallium and arsenic with chlorine gas to form a crude gallium and arsenic chloride mixture, removing arsenic chloride and impurities having a lower boiling point than that of arsenic chloride by evaporation from the chloride mixture, distilling the remaining crude gallium chloride to obtain gallium chloride of high purity and electrolyzing the gallium chloride of high purity to recover metallic gallium.

If scrap does not contain arsenic, arsenic chloride or metallic arsenic or both are added to the scrap and their mixture is treated with chlorine gas to form a crude chloride mixture.

## DETAILED DESCRIPTION OF THE INVENTION

If scrap contains both gallium and arsenic, as in the form of GaAs crystals, it is easily possible to form a crude chloride mixture if the scrap is treated with chlorine gas directly. If the scrap is of metallic gallium and does not contain arsenic, however, the blowing of chlorine gas into the molten scrap forms $GaCl$, $GaCl_2$ and $GaCl_3$ one after another and when $GaCl_2$ turns to $GaCl_3$, the crystals of $GaCl_2$ are precipitated and block the nozzle through which chlorine gas is blown. Therefore, it is necessary to add $AsCl_3$ having a lower melting point to prevent the precipitation of $GaCl_2$. The blocking of the nozzle may be prevented if chlorine gas is blown against the surface of the $GaCl_2$ solution through a nozzle not immersed therein. This method, however, enables only a reaction of low efficiency and requires a long time for chlorination. It is possible to add metallic arsenic instead of $AsCl_3$, as it is chlorinated to form $AsCl_3$ and thereby produces the same results.

It is preferable to form as a result of such chlorination treatment a crude chloride mixture having a molar Ga/As ratio not exceeding I. If the ratio exceeds I, $GaCl_3$ undergoes crystallization when the chloride mixture is cooled to a temperature below 70°C for transfer to the forthcoming step of distillation. The crystallization of $GaCl_3$ makes the transfer of the chloride mixture difficult and its transfer at a temperature of 70°C or above is very dangerous, as $AsCl_3$ produces vapor. The chloride mixture having a molar Ga/As ratio not exceeding I can be transferred safely without causing any crystallization of $GaCl_3$ even at room temperature.

The molar ratio of gallium and arsenic in the chloride mixture can be adjusted if $AsCl_3$ or metallic arsenic or both are added to the scrap, whether it may be scrap containing both gallium and arsenic, or gallium alone. It is appropriate to add $AsCl_3$ or metallic arsenic or both in a molar ratio of I to 5 to gallium. The addition thereof in a larger amount is uneconomical, as it results in an increased consumption of chlorine and an increased production of chloride.

The chlorination is an exothermic reaction. Even if the blowing of chlorine gas is started at room temperature, no heating is required, as a gradually rising temperature promotes the reaction. If the scrap is in the form of lumps, it is advantageous to separate it from a liquid phase and blow chlorine gas against it directly. If the scrap is in the form of powder, it is better to place it in a liquid phase and blow chlorine gas into the liquid phase.

Then, $AsCl_3$ and impurities having a boiling point which is lower than that of $AsCl_3$ are removed by evaporation from the crude gallium and arsenic chloride mixture. The removal of $AsCl_3$ and those impuri-

ties by fractional distillation makes it possible to recover AsCl₃ at a comparatively high purity. A part of the AsCl₃ which has been recovered can be recycled for addition to the scrap to be chlorinated. Alternatively, it can be reduced with hydrogen to form metallic arsenic, or hydrolyzed to form arsenious acid. As the arsenic chloride and impurities have been removed, there now remains crude gallium chloride.

The remaining crude gallium is refined by distillation and the refined product is collected. It is preferably distilled at a temperature of 180°C to 210°C. If its distillation temperature is lower than 180°C, the distillate contains arsenic and other impurities. If it exceeds 210°C, the distillate contains impurities having a high boiling point and fails to provide gallium of high purity. A distillation temperature of 200°C to 208°C is particularly preferred. The distillation is preferably carried out so that the crude gallium chloride in a distillation still may not be distilled completely, but so that at least 10%, or preferably about 20%, thereof may be left undistilled, since a reduction in the amount of the chloride in the still results in a slower rate of distillation which is likely to produce a distillate having a higher content of impurities. The chloride remaining in the still can be recycled for use when another batch of crude GaCl₃ is distilled. The gallium chloride which has been purified by distillation is substantially free from impurities other than arsenic.

The purified gallium chloride is electrolyzed to yield metallic gallium of high purity. The purified gallium chloride still contains about 2% of arsenic, but when it is electrolyzed, the arsenic is removed therefrom substantially completely. The gallium chloride can be dissolved in water to form an acidic solution which can directly be electrolyzed to form metallic gallium. However, as the electrolysis of the acidic solution produces chlorine gas and has a low degree of current efficiency, it is preferable to form a gallate solution and electrolyze it. The gallate solution can be formed if an excess of an alkali, such as NaOH, is added to the aqueous solution of GaCl₃. When the gallate solution is prepared, gallium forms a slurry of Ga(OH)₃. If the slurry has too high a gallium concentration, it is impossible to stir it to dissolve Ga(OH)₃. Therefore, it is preferable for the slurry to have a gallium concentration of 40 to 100 grams per liter. The use of a slurry having a lower gallium concentration should be avoided, as it requires an unnecessarily large amount of electrolyte.

The electrolysis is preferably carried out at a cathode current density of 2.5 to 10 A/dm². Any current density deviating from this range is not practical from the standpoint of current efficiency. For the electrolytic collection of gallium, it is appropriate to use a cathode formed from titanium and an anode formed from platinum or like material. As a result of electrolysis, metallic gallium is precipitated on the cathode. If the concentration of gallium in the electrolyte becomes too low, the rate of its precipitation becomes so low as to make the electrolytic operation inefficient. Therefore, the electrolysis should be discontinued when the concentration of gallium has decreased to a certain level. The gallium remaining in the electrolyte can be recovered by sedimentation in the form of Ga(OH)₃ if the electrolyte is first acidified and then neutralized. The gallium which has been recovered can be used for preparing another batch of electrolyte. As a result of electrolysis, it is possible to recover metallic gallium having a purity of 99.9999%.

The invention will now be described more specifically with reference to a number of examples.

## EXAMPLE 1

A grating holding 600 g of lumps of scrap of a compound of gallium and arsenic containing 41.7% by weight of gallium and 58.0% by weight of arsenic and having a molar Ga/As ratio of 0.77 was placed in a separable flask having a volume of two liters and chlorine gas was blown into the flask at a rate of one liter per minute for five hours, whereby 1568 g of a crude gallium and arsenic chloride mixture were formed at the bottom of the flask. A flask still having a capacity of one liter was charged with 1565 g of the crude chloride mixture and heated by a mantle heater for carrying out distillation. First, AsCl₃ and impurities having a boiling point which was lower than that of AsCl₃ were removed from the chloride mixture. A vapor passageway was cooled by water and the distillate was collected in a receptacle. The distillation was discontinued when the vapor temperature had reached 180°C. Then, the receptacle was changed and while the vapor passageway was held at a temperature of 70°C to 80°C, the distillation was continued until the vapor temperature reached 210°C. The distillation yielded 795.4 g of AsCl₃ and 508.3 g of GaCl₃ with a still residue of 261.3 g. The gallium chloride which had been collected had an arsenic content of 1.6%.

## EXAMPLE 2

A flask having a volume of two liters was charged with 300 g of crude metallic gallium containing 99.0% by weight of gallium and 780 g of AsCl₃. The mixture thereof gave a molar Ga/As ratio of 1.0. Chlorine gas was blown into the liquid in the flask at a rate of one liter per minute for three hours, whereby 1535 g of a crude gallium and arsenic chloride mixture were formed. The method of EXAMPLE 1 was thereafter repeated, whereby 741 g of AsCl₃ and 719 g of GaCl₃ were obtained with a still residue of 75 g. The gallium chloride had an arsenic content of 2 %.

## EXAMPLE 3

465 g of the GaCl₃ which had been obtained in EXAMPLE 1 were dissolved in one liter of pure water. 300 ml of the solution which had been obtained was placed in a beaker having a volume of one liter. Pure water was added into the beaker to prepare one liter of a diluted solution having a gallium content of 46 g per liter for use as an electrolyte. A 90 mm square cathode and a substantially equally sized anode were suspended in the electrolyte. The cathode was a titanium plate and the anode was a net of titanium coated with Pt-Ru. Electrolysis was carried out for 24 hours at a cathode current density (DK) of 3.1 A/dm² and a bath temperature of 20°C, whereby 10.72 g of metallic gallium were collected. The gallium which had been recovered had a purity of 99.9999% by weight. TABLE 1 shows the impurities which it contained.

TABLE 1 – Impurities (ppm)

| Si | S | Mg | Fe |
|------|------|------|------|
| 0.08 | 0.10 | 0.04 | 0.05 |

Note: Traces of O, C, N, P and Cl were also found, but no other substance was detected.

EXAMPLE 4

400 ml of the GaCl₃ solution which had been prepared in EXAMPLE 3 was placed in a beaker having a volume of two liters. Pure water was added into the beaker to form 1200 ml of a diluted solution. 183 g of high purity sodium hydroxide crystals were added into the solution and the solution was stirred to yield 1400 ml of a gallate solution having a gallium content of 52.8 g per liter for use as an electrolyte. One liter of the electrolyte was placed in a beaker having a volume of one liter. The electrolytic method of EXAMPLE 3 was repeated to recover 45.67 g of metallic gallium. A current efficiency of 87.8% was achieved. The gallium which had been recovered had a purity of 99.9999 by weight. TABLE 2 shows the impurities which it contained.

TABLE 2 – Impurities (ppm)

| Al | Si | S | Ca | Fe | Cu |
|------|------|------|------|------|------|
| 0.03 | 0.10 | 0.20 | 0.08 | 0.03 | 0.30 |

Note: Traces of O, C, N, F and Cl were also found, but no other substance was detected.

Claims

1. A method of recovering gallium comprising:
treating scrap containing gallium and arsenic with chlorine gas to form a crude gallium and arsenic chloride mixture;
removing arsenic chloride and impurities having a lower boiling point than that of arsenic chloride by vaporization from said mixture to obtain crude gallium chloride;
distilling said crude gallium chloride to purify it; and
electrolyzing said purified gallium chloride to recover metallic gallium therefrom.

2. A method as set forth in claim 1, further including adding to said scrap at least one substance selected from arsenic chloride and metallic arsenic so that said scrap may have a molar gallium/arsenic ratio not exceeding 1 before it is treated with chlorine gas.

3. A method as set forth in claim 2, wherein the impurities having a lower boiling point than that of said substance are removed by distillation so that arsenic chloride may be collected separately from said impurities.

4. A method as set forth in claim 1, wherein said crude gallium chloride is distilled at a temperature of 180°C to 210°C.

5. A method as set forth in claim 4, wherein said crude gallium chloride is distilled at a temperature of 200°C to 208°C.

6. A method as set forth in claim 1, wherein said distilling is discontinued when at least 10% by weight of said crude gallium chloride remains undistilled.

7. A method as set forth in claim 1, wherein a gallate solution is prepared from said purified gallium chloride for use as an electrolyte.

8. A method as set forth in claim 7, wherein said gallate solution has a gallium content of 40 to 100 g per liter.

9. A method as set forth in claim 1, wherein a cathode current density of 2.5 to 10 A/dm² is employed for said electrolysing.

10. A method of recovering gallium comprising:
adding at least one substance selected from arsenic chloride and metallic arsenic to scrap of metallic gallium;

4

treating said scrap with chlorine gas to form a crude gallium and arsenic chloride mixture;

removing arsenic chloride and impurities having a lower boiling point than that of arsenic chloride by vaporization from said mixture to obtain crude gallium chloride;

distilling said crude gallium chloride to purify it; and

electrolyzing said purified gallium chloride to recover metallic gallium therefrom.

II. A method as set forth in claim IO, wherein said scrap to which said substance has been added has a molar gallium/arsenic ratio not exceeding I.

I2. A method as set forth in claim IO, wherein the impurities having a lower boiling point than that of said substance are removed by distillation so that arsenic chloride may be collected separately from said impurities.

I3. A method as set forth in claim IO, wherein said crude gallium chloride is distilled at a temperature of I80°C to 2I0°C.

I4. A method as set forth in claim I3, wherein said crude gallium chloride is distilled at a temperature of 200°C to 208°C.

I5. A method as set forth in claim IO, wherein said distilling is discontinued when at least IO% by weight of said crude gallium chloride remains undistilled.

I6. A method as set forth in claim IO, wherein a gallate solution is prepared from said purified gallium chloride for use as an electrolyte.

I7. A method as set forth in claim I6, wherein said gallate solution has a gallium content of 40 to I00 g per liter.

I8. A method as set forth in claim IO, wherein a cathode current density of 2.5 to IO A/dm² is employed for said electrolysing.

**Patentansprüche**

1) Verfahren zum Rückgewinnen vom Gallium, enthaltend:

chemisches Behandeln eines Gallium und Arsen enthaltenden Schrottes mit Chlorgas, um ein Rohgemisch aus Gallium- und Arsenchlorid zu bilden;

Entziehen des Arsenchlorids und der Verunreinigungen, deren Siedepunkt niedriger ist als der Siedepunkt des Arsenchlorids, aus dem Gemisch durch Verdampfung, um Roh-Galliumchlorid zu gewinnen;

Destillieren des Roh-Galliumchlorids, um es zu reinigen; und

Elektrolysieren des gereinigten Galliumchlorids, um von ihm metallisches Gallium rückzugewinnen.

2) Verfahren nach Anspruch 1, ferner enthaltend das Hinzufügen mindestens einer Substanz, die aus Arsenchlorid und metallischem Arsen ausgewählt ist, zu dem Schrott derart, daß der Schrott, bevor er mit Chlorgas chemisch behandelt wird, ein Gallium/Arsen-Molverhältnis haben kann, welches 1 nicht überschreitet.

3) Verfahren nach Anspruch 1, bei welchem die Verunreinigungen, deren Siedepunkt niedriger ist als der Siedepunkt der Substanz, durch Destillieren so entzogen werden, daß das Arsenchlorid von den Verunreinigungen separat gesammelt werden kann.

4) Verfahren nach Anspruch 1, bei welchem das Roh-Galliumchlorid in einem Temperaturbereich von 180 °C bis 210 °C destilliert wird.

5) Verfahren nach Anspruch 1, bei welchem das Roh-Galliumchlorid in einem Temperaturbereich von 200 °C bis 208 °C destilliert wird.

6) Verfahren nach Anspruch 1, bei welchem das Destillieren unterbrochen wird, wenn noch mindestens 10 Gew.% des Roh-Galliumchlorids undestilliert vorliegen.

7) Verfahren nach Anspruch 1, bei welchem aus dem gereinigten Galliumchlorid eine Gallatlösung zum Gebrauch als Elektrolyt hergestellt wird.

8) Verfahren nach Anspruch 7, bei welchem die Gallatlösung einen Galliumgehalt von 40 bis 100 g pro Liter hat.

9) Verfahren nach Anspruch 1, bei welchem für das Elektrolysieren eine Kathodenstromdichte von 2.5 bis 10 A/dm² verwendet wird.

10) Verfahren zum Rückgewinnen vom Gallium, enthaltend:

Hinzufügen mindestens einer Substanz, die aus Arsenchlorid und metallischem Arsen ausgewählt ist, zu dem Schrott des metallischen Galliums;

chemisches Behandeln des Schrottes mit Chlorgas, um ein Rohgemisch aus Gallium- und Arsenchlorid zu bilden;

Entziehen des Arsenchlorides und der Verunreinigungen, deren Siedepunkt niedriger ist als der Siedepunkt des Arsenchlorids, aus dem Gemisch durch Verdampfung, um Roh-Galliumchlcrid zu gewinnen;

Destillieren des Roh-Galliumchlorids, um es zu reinigen;

und Elektrolysieren des gereinigten Galliumchlorids, um von ihm metallisches Gallium rückzugewinnen.

11) Verfahren nach Anspruch 10, bei welchem der Schrott, zu dem die Substanz hinzugefügt wurde, ein Gallium/Arsen-Molverhältnis hat, welches 1 nicht überschreitet.

12) Verfahren nach Anspruch 10, bei welchem die Verunreinigungen, deren Siedepunkt niedriger ist als der Siedepunkt der Substanz, durch Destillieren so entzogen werden, daß das Arsenchlorid von den Verunreinigungen separat gesammelt werden kann.

13) Verfahren nach Anspruch 10, bei welchem das Roh-Galliumchlorid in einem Temperaturbereich von 180 °C bis 210 °C destilliert wird.

14) Verfahren nach Anspruch 13, bei welchem das Roh-Galliumchlorid in einem Temperaturbereich von 200 °C bis 208 °C destilliert wird.

15) Verfahren nach Anspruch 10, bei welchem das Destillieren unterbrochen wird, wenn noch mindestens 10 Gew.% des Roh-Galliumchlorids undestilliert vorliegen.

16) Verfahren nach Anspruch 10, bei welchem aus dem gereinigten Galliumchlorid eine Gallatlösung zum Gebrauch als Elektrolyt hergestellt wird.

17) Verfahren nach Anspruch 16, bei welchem die Gallatlösung einen Galliumgehalt von 40 bis 100 g pro Liter hat.

18) Verfahren nach Anspruch 10, bei welchem für das Elektrolysieren eine Kathodenstromdichte von 2.5 bis 10 A/dm² verwendet wird.

## Revendications

1. Procédé de récupération de gallium, caractérisé en ce qu'il comprend:
le traitement de déchets contenant du gallium et de l'arsenic avec du chlore gazeux pour former un mélange brut de chlorures de gallium et d'arsenic;
l'élimination du chlorure d'arsenic et des impuretés ayant un point d'ébullition inférieur à celui du chlorure d'arsenic par vaporisation à partir de ce mélange, afin d'obtenir du chlorure de gallium brut;
la distillation de ce chlorure de gallium brut pour le purifier; et
l'électrolyse de ce chlorure de gallium purifié pour en récupérer le gallium métallique.

2. Procédé suivant la revendication 1, caractérisé en ce qu'il comprend de plus l'addition à ces déchets d'au moins une substance choisie parmi le ohlorure d'arsenic et l'arsenic métallique de telle sorte que ces déchets peuvent avoir un rapport molaire gallium/arsenic ne dépassant pas 1 avant leur traitement avec du chlore gazeux.

3. Procédé suivant la revendication 2, caractérisé en ce que les impuretés ayant un point d'ébullition inférieur à celui de cette substance sont éliminées par distillation, si bien que le chlorure d'arsenic peut être collecté séparément de ces impuretés.

4. Procédé suivant la revendication 1, caractérisé en ce que ce chlorure de gallium brut est distillé à une température de 180 à 210°C.

5. Procédé suivant la revendication 4, caractérisé en ce que ce chlorure de gallium brut est distillé à une température de 200 à 208°C.

6. Procédé suivant la revendication 1, caractérisé en ce que cette distillation est arrêtée lorsqu'il reste au moins 10% en poids de ce chlorure de gallium brut, qui ne sont pas distillés.

7. Procédé suivant la revendication 1, caractérisé eri ce qu'on prépare une solution de gallate à partir de ce chlorure de gallium purifié, qui est utilisée en tant qu'électrolyte.

8. Procédé suivant la revendication 7, caractérisé en ce que cette solution de gallate a une teneur en gallium de 40 à 100 g par litre.

9. Procédé suivant la revendication 1, caractérisé en ce qu'on emploie une densité de courant cathodique de 2,5 à 10 A/dm² pour cette électrolyse.

10. Procédé de récupération de gallium, caractérisé en ce qu'il comprend:
l'addition d'au moins une substance choisie parmi le chlorure d'arsenic et l'arsenic métallique aux déchets de gallium métallique;
le traitement de ces déchets avec du chlore gazeux pour former un mélange brut de chlorures de gallium et d'arsenic;
l'élimination du chlorure d'arsenic et des impuretés ayant un point d'ébullition inférieur à celui du chlorure d'arsenic par vaporisation à partir de ce mélange, afin d'obtenir un chlorure de gallium brut;
la distillation de ce chlorure de gallium brut pour le purifier; et
l'électrolyse de ce chlorure de gallium purifié pour en récupérer le gallium métallique.

11. Procédé suivant la revendication 10, caractérisé en ce que ces déchets auxquels a été ajoutée cette substance, ont un rapport molaire gallium/arsenic ne dépassant pas 1.

12. Procédé suivant la revendication 10, caractérisé en ce que les impuretés ayant un point d'ébullition inférieur à celui de cette substance sont éliminées par distillation, si bien que le chlorure d'arsenic peut être collecté séparément de ces impuretés.

13. Procédé suivant la revendication 10, caractérisé en ce que ce chlorure de gallium brut est distillé à une température de 180 à 210°C.

14. Procédé suivant la revendication 13, caractérisé en ce que ce chlorure de gallium brut est distillé à une température de 200 à 208°C.

15. Procédé suivant la revendication 10, caractérisé en ce que cette distillation est arrêtée lorsqu'il reste au moins 10% en poids de ce chlorure de gallium brut, qui ne sont pas distillés.

16. Procédé suivant la revendication 10, caractérisé en ce qu'on prépare une solution de gallate à partir de ce chlorure de gallium purifié, qui est utilisée en tant qu'électrolyte.

17. Procédé suivant la revendication 16, caractérisé en ce que cette solution de gallate a une teneur en gallium de 40 à 100 g par litre.

18. Procédé suivant la revendication 10, caractérisé en ce qu'on emploie une densité de courant cathodique de 2,5 à 10 A/dm² pour cette électrolyse.